# EUROPEAN PATENT APPLICATION

(11) **EP 2 991 072 A1**
(43) Date of publication of application: **02.03.2016**
(21) Application number: 15181311.0
(22) Date of filing: 17.08.2015
(51) Int. Cl.: G10L 15/08, G10L 15/32, G10L 15/20, G10L 15/14, G10L 15/187, G10L 15/02

(54) **METHODS AND APPARATUS FOR INTERPRETING CLIPPED SPEECH USING SPEECH RECOGNITION**

(30) Priority: 26.08.2014 US 201414468594
(71) Applicant: Honeywell International Inc., Morris Plains, NJ 07950 (US)
(72) Inventor: NELSON, Erik T., Morristown, NJ 07962-2245 (US)
(74) Representative: Houghton, Mark Phillip

(57) **Abstract**

A method for receiving and analyzing data compatible with voice recognition technology is provided.The methodreceives speech data comprising at least a subset of an articulated statement;executes a plurality of processes to generate a plurality of probabilities, based on the received speech data, each of the plurality of processes being associated with a respective candidate articulated statement, and each of the generated plurality of probabilities comprising a likelihood that an associated candidate articulated statement comprises the articulated statement; and analyzes the generated plurality of probabilities to determine a recognition result, wherein the recognition result comprises the articulated statement.

## Description

### TECHNICAL FIELD

Embodiments of the subject matter described herein relate generally to speech recognition systems. More particularly, embodiments of the subject matter relate to speech recognition for potentially incomplete speech data samples.

### BACKGROUND

During use of push-to-talk devices, it is a common occurrence for users to unintentionally shorten (e.g., cut off or "clip") a message by pressing the push-to-talk button after speech has begun or releasing the push-to-talk button prior to completing an articulated statement. When a user is communicating with a second user (via the push-to-talk device), the second user can often still understand what the first user was saying, even though the second user did not receive the entire message.

When the user is using a push-to-talk device equipped with speech recognition technology, a shortened or clipped message may cause speech recognition algorithms to fail. Additionally, clipping may occur with automatic gain control systems that do not use push-to-talk technology. For example, if a person begins speaking too quietly, the beginning of a command may be clipped. Clips that remove the first part of the message are detrimental to signal processing algorithms used for speech recognition, to include Hidden Markov Models (HMMs). HMMs evaluate each codeword separately and determine the probability of each codeword based on the codeword that preceded it. If the first codeword of an utterance is clipped, the speech recognition system will most likely be unable to recognize what was spoken, and this can lead to poor speech recognition performance.

Accordingly, it is desirable to provide a method for identifying and interpreting clipped speech using speech recognition technology. Furthermore, other desirable features and characteristics will become apparent from the subsequent detailed description and the appended claims, taken in conjunction with the accompanying drawings and the foregoing technical field and background.

### BRIEF SUMMARY OF EMBODIMENTS

Some embodiments of the present invention provide a method for receiving and analyzing data compatible with voice recognition technology. The method receives speech data comprising at least a subset of an articulated statement; executes a plurality of processes to generate a plurality of probabilities, based on the received speech data, each of the plurality of processes being associated with a respective candidate articulated statement, and each of the generated plurality of probabilities comprising a likelihood that an associated candidate articulated statement comprises the articulated statement; and analyzes the generated plurality of probabilities to determine a recognition result, wherein the recognition result comprises the articulated statement.

Some embodiments provide a system for receiving data compatible with speech recognition technology. The system includes a user input module, configured to receive a set of audio data; a data analysis module, configured to: calculate one or more probabilities based on the received speech data, each of the calculated plurality of probabilities indicating a statistical likelihood that the set of audio data comprises a candidate word; and determine a speech recognition result, based on the calculated plurality of probabilities.

Some embodiments provide a non-transitory, computer-readable medium containing instructions thereon, which, when executed by a processor, perform a method. In response to a received set of user input compatible with speech recognition (SR) technology, the method: executes a plurality of multi-threaded processes to compute a plurality of probabilities, each of the plurality of probabilities being associated with a respective one of the plurality of multi-threaded processes; compares each of the plurality of probabilities to identify one or more probabilities above a predefined threshold; and presents a recognition result, based on the identified one or more probabilities above the predefined threshold.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a schematic block diagram representation of a speech data recognition system, according to some embodiments;
FIG. 2 is a flow chart that illustrates an embodiment of a process for receiving data compatible with speech recognition technology;.
FIG. 3 is a flow chart that illustrates another embodiment of a process for receiving data compatible with speech recognition technology;
FIG. 4 is a flow chart that illustrates an embodiment of a process for comparing a first phoneme of a received set of speech data to one or more candidate words stored in a system dictionary;
FIG. 5 is a flow chart that illustrates an embodiment of a process for executing a plurality of processes for clipped speech recognition;
FIG. 6 is a schematic diagram representation of a speech data recognition system, according to some embodiments;
FIG. 7 is a schematic diagram representation of a database of possible prefixes, according to some embodiments;
FIG. 8 is a flow chart that illustrates an embodiment of a process for analyzing received speech data; and
FIG. 9 is a flow chart that illustrates an embodiment of a process for preparing a speech recognition system for speech recognition applications.

### DETAILED DESCRIPTION

The following detailed description is merely illustrative in nature and is not intended to limit the embodiments of the subject matter or the application and uses of such embodiments.As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

The subject matter presented herein relates to methods and apparatus used to interpret received speech data, whether the speech data is a complete or incomplete statement. A statement articulated by a user conveys a set of speech data. The set of received speech data may have been "clipped" or cut off during articulation, or in other words, the received set of speech data may be incomplete due to an omitted portion. The omitted portion may include one or more whole words, phonemes, codewords, or other defined portion of an utterance. A system executes a plurality of signal processing algorithms used for speech recognition, to calculate probabilities associated with: (i) the received speech data being associated with a complete statement, and (ii) the received speech data being associated with an incomplete statement due to a clipped portion.

In the context of this application, the terms "speech recognition" and "voice recognition" are interchangeable. Further, the terms "speech data" and "voice data" are also interchangeable. A sample or set of speech data includes at least one word. One or more words are stored individually, in a system Dictionary. Each word comprises one or more phonemes, which may be defined as any of the perceptually distinct units of sound in a specified language that distinguish one word from another. Phonemes may include, but are not limited to, distinct units of sound associated with the English language. Phonemes provide a phonetic representation of a subset of each word, which may include a portion of the word, up to and potentially including the entire word.Each phoneme may be associated with one or more codewords, or subphonetic representations of portions of a word. Further, words may be referenced using a system Language Model, to retrieve probabilities that individual words and/or word combinations may occur in a received set of speech data.

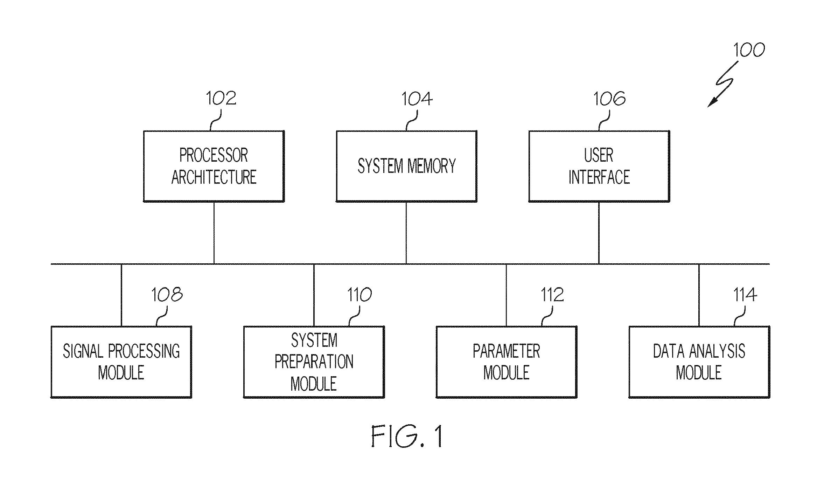

Referring now to the drawings, FIG. 1 is a schematic block diagram representation of a speech data recognition system, according to some embodiments. The speech data recognition system 100 may be implemented using any desired platform. For example, the voice data recognition system 100 could be realized as any of the following, without limitation: a desktop computer, a laptop computer, a server system, a mobile device, a specialized piece of diagnostic equipment, an embedded processor-based device or system, or any other device that includes a processor architecture 102.

The speech data recognition system 100 may include, without limitation: a processor architecture 102; a system memory 104; a user interface 106; a signal processing module 108; a system preparation module 110; a parameter module 112; and a data analysis module 114. In practice, an embodiment of the speech data recognition system 100 may include additional or alternative elements and components, as desired for the particular application. For example, additional components such as displays and user input components may be employed without departing from the scope of the present disclosure. For ease of illustration and clarity, the various physical, electrical, and logical couplings and interconnections for these elements and features are not depicted in FIG. 1. Moreover, it should be appreciated that embodiments of the speech data recognition system 100 will include other elements, modules, and features that cooperate to support the desired functionality. For simplicity, FIG. 1 only depicts certain elements that relate to the speech data recognition and completion techniques described in more detail below.

The processor architecture 102 may be implemented using any suitable processing system, such as one or more processors 110 (e.g., multiple chips or multiple cores on a single chip), controllers, microprocessors, microcontrollers, processing cores and/or other computing resources spread across any number of distributed or integrated systems, including any number of "cloud-based" or other virtual systems.

The processor architecture 102 is in communication with system memory 104. The system memory 104 represents any non-transitory short or long term storage or other computer-readable media capable of storing programming instructions for execution on the processor architecture 102, including any sort of random access memory (RAM), read only memory (ROM), flash memory, magnetic or optical mass storage, and/or the like. It should be noted that the system memory 104 represents one suitable implementation of such computer-readable media, and alternatively or additionally, the processor architecture 102 could receive and cooperate with external computer-readable media that is realized as a portable or mobile component or application platform, e.g., a portable hard drive, a USB flash drive, an optical disc, or the like.

The user interface 106 accepts information from a user of the speech data recognition system 100, including speech data and information necessary to receive and recognize speech data. User interface 106 may include any means of transmitting user input into the speech data recognition system 100, to include without limitation: a microphone, a push-to-talk or push-to-transmit (PTT) device, a push-to-talk over cellular (PoC) device, or otherinput device capable of receiving audio data. The user interface 106 may further include a computer keyboard, mouse, touch-pad, trackball, a touch-screen device; and/or other input device.

The signal processing module 108 is suitably configured to analyze received speech data to obtain a set of recognized codewords. To accomplish this, the signal processing module 108 can utilize continuous to discrete signal conversion techniques for signal processing (e.g., fast Fourier transforms (FFT), linear predictive coding (LPC), filter banks, etc.) to generate quantized feature vector representations of the received speech data. The signal processing module 108 is also configured to predefine a set number of quantization vectors, or codewords, based on this quantization process. During the quantization process, the signal processing module 108 transforms continuous signals into discrete signals (e.g., codewords).

The system preparation module 110 is configured to determine and store a probabilistic relationship between a codeword, recognized by the signal processing module 108, and one of the phonemes associated with a particular language. In certain embodiments, phonemes utilized by the speech data recognition system 100 are associated with the English language. In some embodiments, the speech data recognition system 100 utilizes phonemes associated with a non-English language. Generally, each phoneme is associated with a plurality of codewords. The system preparation module 110 determines the probabilistic relationship between a recognized codeword and a particular phoneme using a plurality of received samples of a particular phoneme.

The parameter module 112 is configured to constrain operation of the speech data recognition system 100 by limiting the interpretations of the received speech data to a set of predefined possibilities retained in system memory 104, generally referred to as a speech data recognition system 100 Dictionary. The Dictionary may include words and/or groups of words, and their corresponding phonemes. Each word in the Dictionary includes one or more "component" phonemes, representing each enunciated sound during articulation of the word. The parameter module 110 can: *(i)*communicate with the system preparation module 110 to obtain phonemes of a set of received speech data, wherein each phoneme is probabilistically related to a group of received codewords; and*(ii)* compare the phonemes associated with the received speech data with phonemes associated with words stored in the dictionary, and *(iii)* limit the candidate words, and their component phonemes, that are further evaluated by the data analysis module 114 (described in more detail below).

The parameter module 110 is further configured to constrain operation of the speech data recognition system 100 by limiting the interpretations of the received speech data contextually, using a Language Model, which is also retained in system memory 104. The Language Model is used to predict the probability of the next word in an utterance, given the previous word spoken. It can be used to identify the probability that a word (and its component phonemes) or a group of words (and their component phonemes) occurs in a set of speech data. The parameter module 110 may identify a limited set of potential words from the Dictionary (and their corresponding phonemes) that may be applicable to the received set of speech data.

The data analysis module 114 is suitably configured to determine the probability that a particular string of phonemes (each phoneme associated with one or more codewords) corresponds to a set of received speech data. In certain embodiments, the set of received speech data includes a complete articulated statement, or in other words, a complete set of speech data. In this situation, the data analysis module 114 is configured to determine a probability that a particular string of phonemes corresponds to the set of received speech data. In certain embodiments, the set of received speech data includes an incomplete portion of a complete set of speech data, wherein the complete set of speech data is not received due to an error (e.g., user error, system error, etc.). In this situation, the data analysis module 114 is configured to determine a probability that a particular string of phonemes corresponds to the complete set of speech data.

The data analysis module 114 can execute hidden Markov models (HMMs) to calculate the probability that a sequence of phonemes corresponds to a complete set of speech data, wherein the received set of speech data comprises at least a subset or portion of a complete set of speech data. In certain embodiments, one ofthe sequence of phonemesis probabilistically related to one or more recognized codewords from a set of received speech data.In some embodiments, the sequence of phonemes may include only recognized phonemes from the set of received speech data. However, in some embodiments, in addition to the recognized phonemes from the set of received speech data, the sequence of phonemes also includes one or more additional phonemes to complete the received set of speech data.

In exemplary embodiments, the data analysis module 114 is capable of executing HMMs to calculate the probability that a sequence of phonemes corresponds to a complete set of speech data, as described above. However, in some embodiments, the data analysis module 114 may use other techniques that are capable of temporal pattern recognition, to include neural networks.

The data analysis module 114 is further configured to determine a probability that a particular string of phonemes can be used in a correct word combination applicable to a candidate word; and, when more than one candidate string of phonemes can correspond to a received set of speech data, to compare the probabilities to determine a specified number of options.

The data analysis module 114 is configured to execute a number of processes, each of the processes including at least one Hidden Markov Model (HMM). Each process represents a particular number of potentially omitted phonemes. For example, in one scenario, the voice data recognition system 100 may be configured to perform analysis relating to zero (0) clipped phonemes, one (1) clipped phoneme, and two (2) clipped phonemes. In another scenario, the speech data recognition system 100 may be configured to perform analysis relating to zero (0) clipped phonemes, one (1) clipped phoneme, two (2) clipped phonemes, and three (3) clipped phonemes. A speech data recognition system 100 may be configured to perform analysis for any desired number of clipped phonemes, but larger numbers of executed processes for increased numbers of clipped phonemes produce probabilities which progressively lose their accuracy and greatly increase processing requirements.

Each executed process, associated with a particular number of potentially omitted phonemes, includes one or more Hidden Markov Models (HMMs). Each HMM is executed to determine the probability that a particular string of phonemes corresponds to the set of received speech data. Once executed, the HMMs generate a set of data, including a plurality of probabilities, each probability associated with a particularstring of one or more phonemes(including known phonemes and unknown candidate phonemes) can be used in a correct word and/or word combination applicable to a candidate articulated statement. Each HMM produces a list of words and/or phrases that were potentially articulated by a user (and consequently, at least partially received by the speech recognition system 100) and each of the words or phrases on the list is associated with a probability of its occurrence. The resultant probabilities from all HMMs are compared to determine a most likely word or phrase that was spoken, or in other words, a recognition result.

In practice, the signal processing module 108, the system preparation module 110, the parameter module 112, and the data analysis module 114 may be implemented with (or cooperate with) the processor architecture 102 to perform at least some of the functions and operations described in more detail herein. In this regard, signal processing module 108, the system preparation module 110, the parameter module 112, and the data analysis module 114 may be realized as suitably written processing logic, application program code, or the like.

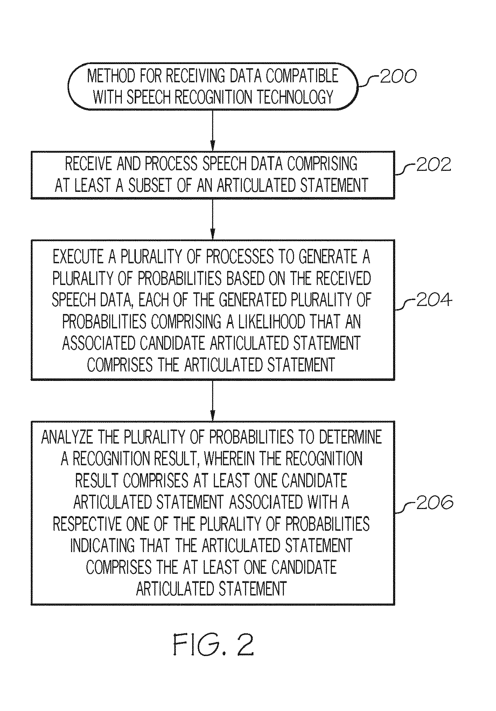

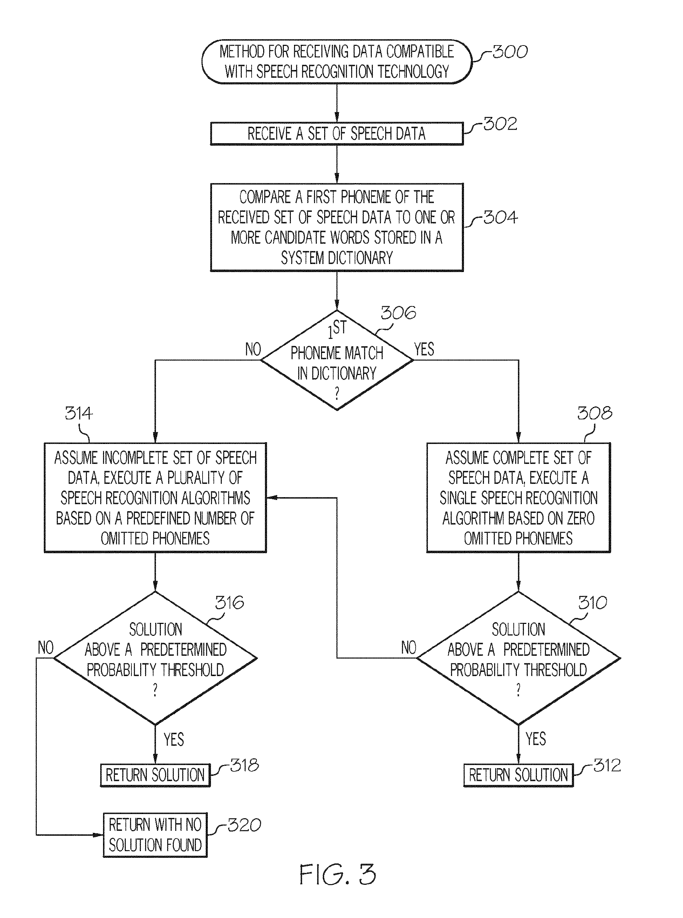

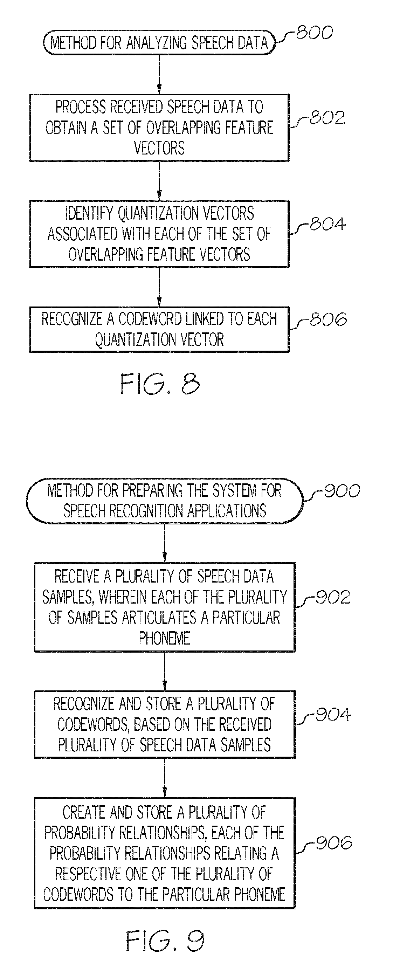

FIG. 2 is a flow chart that illustrates an embodiment of a process 200 for receiving data compatible with speech recognition technology. (One suitable methodology for receivingdata compatible with speech recognition technology is described below with reference to FIG. 3.) First, the process 200 receives and processes speech data comprising at least a subset of an articulated statement (step 202). Generally, the speech data is received via a user input device requiring a user to indicate a starting point and stopping point for speech data, as the speech data is articulated (i.e., spoken aloud) by a user. Such user input devices may use push-to-talk (e.g., press, talk, release), push-to-initiate (e.g., press, release, talk, and the system decides when speech data has ended), or keyword (e.g., the system is continuously "listening" for input speech data) technology to accomplish this. In other words, a user must indicate, via a button-push or some other method, a point in time for the process 200 to begin receiving speech data. In some embodiments, the user is required to indicate that the time for the process 200 to cease receiving the speech data. The process 200 receives, and subsequently analyzes, speech data between these two indications. Errors in the timing of each indication may cause incomplete speech data to be received. Such errors may include a late indication that the speech data has begun (e.g., an indication occurring after a user has begun speaking) and/or an early indication that the speech data has ended (e.g., an indication occurring before the user has stopped speaking), resulting in a portion of the speech data being "clipped", or not received. In certain exemplary embodiments, clipping of speech data occurs due to a late push and/or an early release of a push-to-talk (PTT) indicator, such as a button. In other embodiments, other manually-operated indicators, such as a switch, a toggle, or a lever, may be utilized to signify the beginning or end of speech data input. Here, just as with a PTT indicator, clipping of the speech data may occur due the switch, toggle, or lever being moved after the user has already begun speaking or before the user input statement has been completely articulated. In still other embodiments, a virtually-operated indicator may be used, to include graphical elements on a computer screen, touchscreen, or other user interface. Once received, the process 200 analyzes and manipulates the received set of speech data, using commonly known signal processing techniques, to generate processed audio data for further use (described in more detail herein with reference to FIG. 8).

It should be noted that clips could also occur in situations where Automatic Gain Control is used. In certain embodiments using Automatic Gain Control, the process 200is continuously"listening" for a user to articulate a set of speech data, and an indication of the point in time at which the process 200 begins to receive speech data is not required. In some embodiments, push-to-talk or keyword technology may also be used. For Automatic Gain Control scenarios,if a first portion of the articulated speech data is spoken quietly or there is an increased amount of audio interference, the speech data may be "clipped". Here, a portion of the received speech data may not be appropriately received and interpreted, and the received set of speech data is rendered incomplete.

Next, the process 200 executes a plurality of processes to generate a plurality of probabilities based on the received speech data, each of the generated plurality of probabilities comprising a likelihood that an associated candidate articulated statement comprises the articulated statement (step 204). In certain embodiments, the plurality of processes is executed in a multi-threaded fashion, performing the analysis associated with each process simultaneously. Each process may perform analysis for a designated quantity of clipped or omitted speech data, and each process may include one or more Hidden Markov Models (HMMs) corresponding to the quantity of omitted speech data. The generated probabilities are associated with each HMM, including probabilities directly associated with specified quantities of omitted voice data (e.g., omitted strings of codewords).

The process 200 then analyzes the generated plurality of probabilities to determine a recognition result, wherein the recognition result comprises at least one candidate articulated statement associated with a respective one of the plurality of probabilities indicatingthat the articulated statement comprises the at least one candidate articulated statement (step 206). Generally, a threshold probability value is designatedas a minimum calculated probability indicating that a string of phonemes comprises an articulated statement. In certain embodiments, a specific result is recognized and presented to the user for verification. In some embodiments, more than one result may be recognized. In this case, more than one calculated probability is a value above a predefined threshold.

FIG. 3 is a flow chart that illustrates another embodiment of a process 300 for receiving data compatible with speech recognition technology. It should be appreciated that the process 300 described in FIG. 3 represents one embodiment of process200 described above in the discussion of FIG. 2, including additional detail.First, the process 300 receives a set of speech data (step 302). Speech data is generally received via a speech data input apparatus (e.g., a microphone).A speech data input apparatus may include a mechanism used to indicate a point in time for the process 300 to begin receiving speech data, as described above with regard to FIG. 2, and will not be redundantly described here.

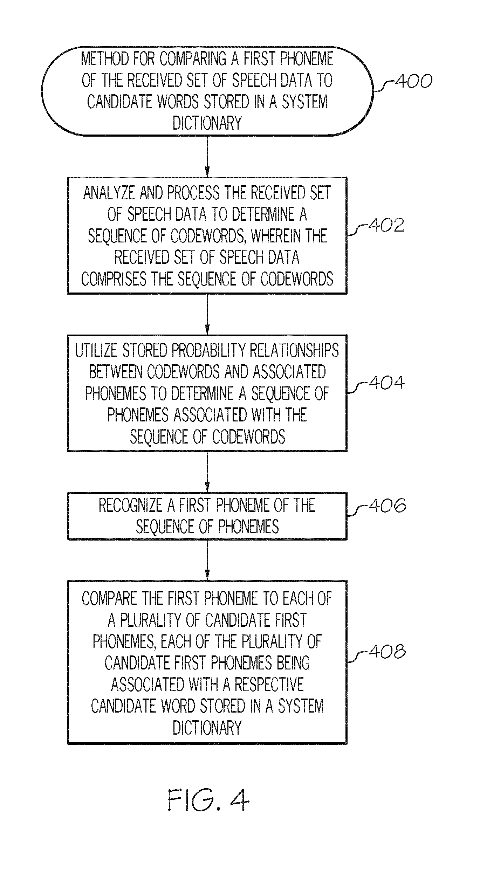

Next, the process 300 compares a first phoneme of the received set of speech data to one or more candidate words stored in a system dictionary (step 304). An embodiment of step 304 is presented in FIG. 4, including more detail. FIG. 4 is a flow chart that illustrates an embodiment of a process 400 for comparing a first phoneme of a received set of speech data to one or more candidate words stored in a system dictionary. First, the process 400 analyzes and processes the received set of speech data to determine a sequence of codewords, wherein the received set of speech data comprises the sequence of codewords (step 402).

Next, the process 400 utilizesstored probability relationships between codewords and associated phonemes to determine a sequence of phonemes associated with the sequence of codewords (step 404). Following system preparation (see embodiment illustrated in FIG. 9), a probability relationship exists between a phoneme and one or more codewords. For example, there exists a first mathematical probability that codeword X is an instance of phoneme A, a second mathematical probability that codeword X is an instance of phoneme B, and a third mathematical probability that codeword X is an instance of phoneme C. Based on these mathematical probabilities, the process 400 is capable of determining that the most likely phoneme that was spoken, of the group of phonemes A, B, and C. Once the first codeword (in this example, codeword X) is associated with the most probable phoneme, the process 400 moves on to the next codeword (or group of codewords) in the sequence of received and recognized codewords, and determines the next phoneme in the set of received speech data. Using the probability relationships to determine associated phonemes for each received codeword or set of codewords results in a determined sequence of phonemes for the set of received speech data.

After determining a sequence of phonemes associated with the sequence of received codewords (step 404), the process 400 recognizes a first phoneme of the sequence of phonemes (step 406). Once the first phoneme of the sequence of phonemes has been recognized (step 406), the process 400 compares the first phoneme to a plurality of candidate first phonemes, each of the plurality of candidate first phonemes being associated with a respective candidate word stored in a system dictionary (step 408). The system dictionary includes stored candidate words and, for each candidate word, a plurality of phonemes associated with each stored word. The first determined phoneme is associated with the first codeword, or first group of codewords, in the sequence of received speech data. The first determined phoneme is compared to a first sequential phoneme for a plurality of candidate words stored in the system dictionary.

Returning now to FIG. 3, when the first phoneme matches a first phoneme of one or more candidate words in the system dictionary (the "Yes" branch of 306), the process 300 assumes that the received set of speech data is complete and executes a single speech recognition algorithm (step 308) to perform analysis based on that assumption. In certain embodiments, the single speech recognition algorithm comprises a Hidden Markov Model (HMM). Here, an HMM may be executed to determine a likelihood that what was spoken (i.e., the received set of speech data) corresponds to the results from the HMM. Generally, the received set of speech data includes a string of phonemes (and each phoneme includes one or more codewords), and the string of phonemes is analyzed using the HMM to determine a probability that the string of phonemes is an accurate representation of the statement articulated by the user.

Once the single speech recognition algorithm has been executed (step 308), the resulting calculated probability is compared to a predetermined probability threshold (step 310). When the calculated probability is above the predetermined probability threshold (the "Yes" branch of 310), the process 300 returns a solution (step 312). Here, the solution is a string of phonemes associated with the calculated probability, and for which the speech recognition algorithm was executed in step 308. When the calculated probability is not above the predetermined probability threshold (the "No" branch of 310), the process 300 assumes an incomplete set of speech data and executes a plurality of speech recognition algorithm based on a predefined number of omitted phonemes (step 314).

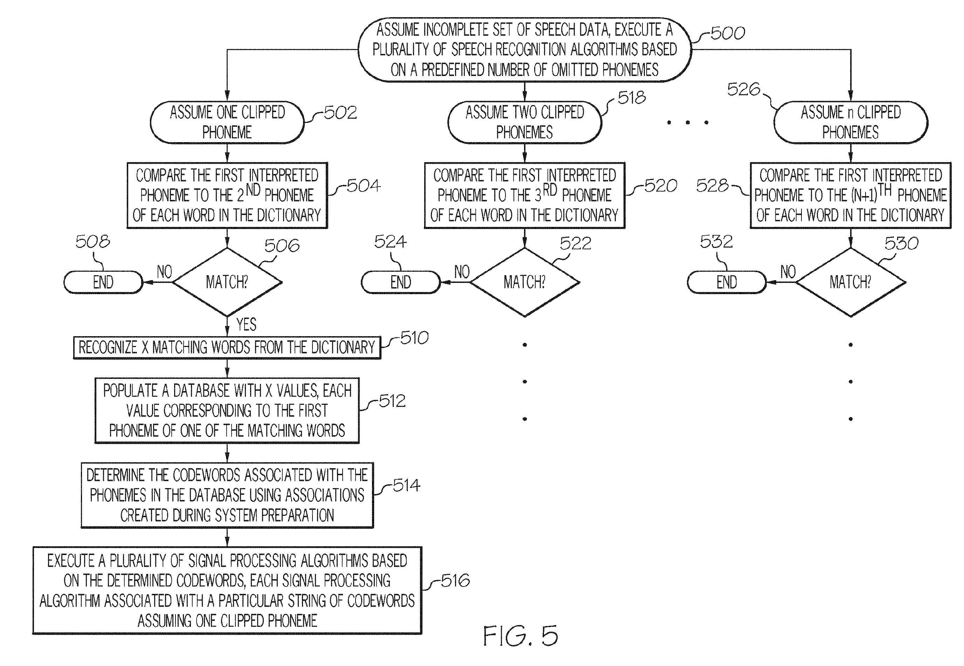

However, when the first phoneme does not match the first phoneme of at least one candidate word in the system dictionary (the "No" branch of 306), the process 300 assumes that the received set of speech data is incomplete and executes a plurality of speech recognition algorithms based on a predefined number of omitted phonemes.An embodiment of step 314 is presented in FIG. 5, including more detail. FIG. 5 is a flow chart that illustrates an embodiment of a process 500 for executing a plurality of processes for clipped speech recognition. As shown, the process 500 executes n processes, including: a first process which assumes the received set of speech data includes one clipped phoneme (step 502), a second process assuming two clipped phonemes (step 518), and a designated number of processes up to an nth process which assumes *n* clipped phonemes (step 526). The total number of processes executed is an engineering decision and is predefined. As shown, each executed process performs the same steps, which will be herein described as they relate to a first process (step 502).

Assuming one clipped phoneme, the process 502 compares a first interpreted phoneme to a second phoneme for each word stored in the system dictionary (step 504). If there is no match (the "No" branch of 506), then the process 502 assuming one clipped phoneme ends (or fails), and no probability will be calculated based on the condition of one clipped phoneme. If there are one or more words in the system dictionary that have a second phoneme that matches the first interpreted phoneme from the set of received speech data (the "Yes" branch of 506), then the process 502 recognizes the matching words (step 510). Here, there are X number of matching words, and X may be greater than or equal to one.

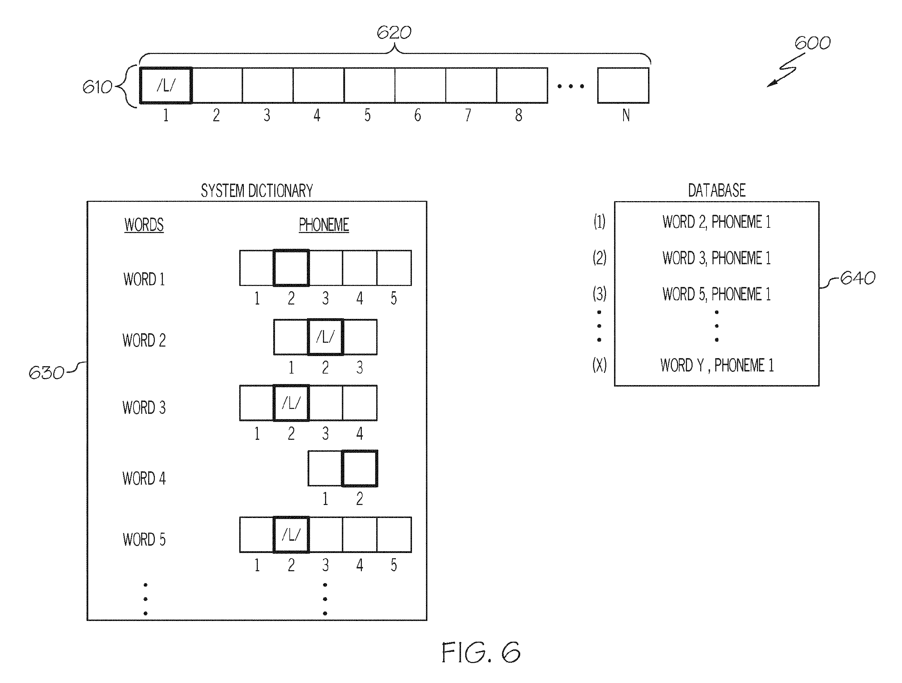

After recognizing X matching words from the system dictionary (step 510), the process 502 populates a database with X values, each value corresponding to the first phoneme of one of the matching words (step 512). An embodiment of the concepts involved in steps 504, 506, 510, and 512are illustrated in FIG. 6, including more detail. As shown in FIG. 6, an utterance 610 received and interpreted by a speech data recognition system 600 comprises a plurality or "string" of phonemes 620. Further, in the example illustrated in FIG. 6, the speech data recognition system 600 is assuming the existence of one additional phoneme that has been clipped (e.g., not received) from the beginning of the utterance 610. This clipped or omitted phoneme, if it had been received by the speech data recognition system 600,would exist prior to the first phoneme of the string of phonemes 620, rendering the first received phoneme (in this example, /L/) the actual second phoneme of the utterance 610. The speech data recognition system 600 compares the /L/ phoneme to the second phonemes of each word in the system dictionary 630, seeking a match. Here, the speech data recognition system 600 may recognize any number of matching words having the phoneme /L/ in the second phoneme position, up to and possibly including the maximum number of words in the system dictionary 630. As shown in the example system dictionary 630, at minimum, Word 2, Word 3, and Word 5 include the phoneme /L/ in the second phoneme position. Therefore, Word 2, Word 3, and Word 5 are matching words. The speech data recognition system 600 recognizes the potentially clipped first phonemes of each matching word (in this example, Word 2, Word 3, and Word 5), and populates a database 640 of possible prefixes with each of the first phonemes of the matching words.

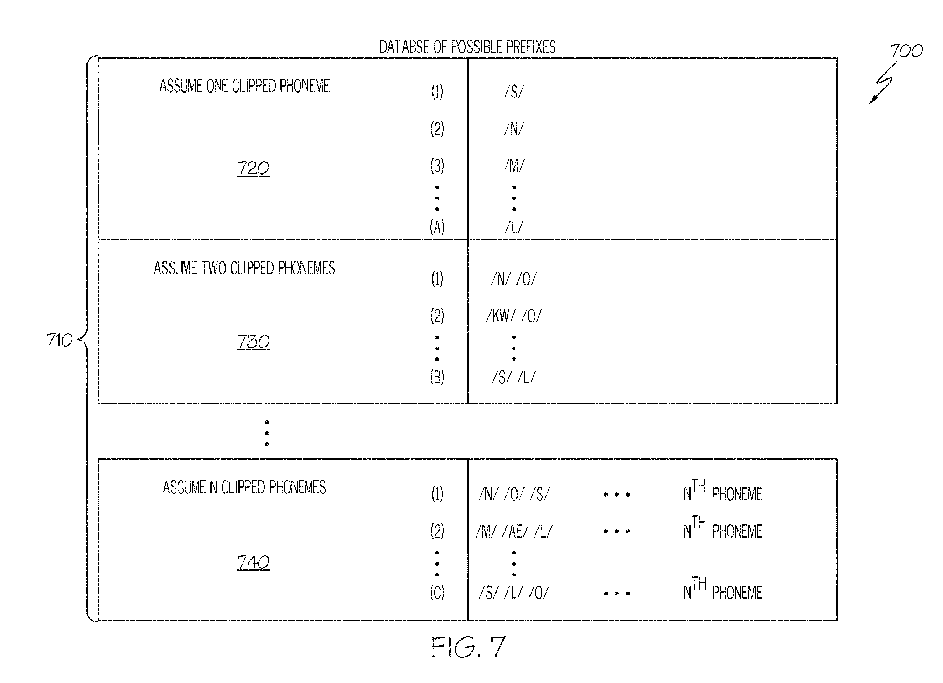

Returning to FIG. 5, the process 502 is assuming that the first phoneme has been clipped, and the process 502 has determined the speech recognition possibilities stored in the system dictionary based on the first interpreted phoneme, which is assumed to be the second sequential phoneme of a candidate word. The first phoneme of each candidate word stored in the dictionary may be the omitted or clipped phoneme, and the process 502 populates a database with these possible clipped phonemes. An embodiment of a database of possible prefixes is illustrated in FIG. 7, including more detail. FIG. 7 is populated by prefixes from reference 640 of FIG. 6. For each of the matching phonemes located in reference 630, the phoneme prior to the match is saved to database 640, and the database of possible prefixes of FIG. 7 is created using this information. As shown in FIG. 7, a database of possible prefixes 700 may include up to *n* groups 710 of potential prefixes, wherein each of the groups 710 is associated with a particular number of omitted or clipped phonemes. In the example shown, the first group 720 assumes that one phoneme has been clipped from an utterance, the second group 730 assumes that two phonemes have been clipped from the utterance, and the third group 740 assumes that *n* phonemes have been clipped from the utterance. Additional groups may be included and are referenced by the use of an ellipsis between the second group 730 and the third group 740.

Here, the first group 720 includes a maximum of *A* possibilities of a single phoneme that has been clipped from an utterance. The second group 730 includes a maximum of *B* possibilities of a series of two phonemes that have been clipped from the utterance. The third group 740 includes a maximum of C possibilities of a series of *n* phonemes that have been clipped from the utterance. For purposes of this example, the ellipsis may represent a maximum of D possibilities of a series of phonemes that have been clipped from the utterance, wherein the D possibilities include all possibilities assuming that the number of clipped phonemes is more than two clipped phonemes, but less than n clipped phonemes.

Returning to FIG. 5, the process 502 then determines the codewords associated with the phonemes stored in the database (step 514), using the predetermined probability relationships stored during system preparation (an exemplary embodiment of system preparation is illustrated in FIG. 7). Once the process 502 has determined the codewords associated with each of the phonemes stored in the database using associations created during system preparation (step 514), then the process 502 executes a plurality of signal processing algorithms based on the determined codewords, each signal processing algorithm being associated with a particular string of codewords assuming one clipped phoneme (step 516). As illustrated in more detail in FIG. 7, the process 502 executes *A* processes associated with the group of possibilities assuming one clipped phoneme, the process 518 executes B processes associated with the group of possibilities assuming two clipped phonemes, the process 526 executes C processes associated with the group of possibilities assuming *n* clipped phonemes. Further, there are *D* possibilities associated with the group(s) of possibilities assuming more than two, but less than *n,* clipped phonemes. In this example, the total number of executed signal processing algorithms equals *A*+*B*+*C*+*D*.

Returning to FIG. 3, once the plurality of speech recognition algorithms, based on a predefined number of omitted phonemes, have been executed based on the assumption that the received set of speech data is incomplete (step 314), the process 300 compares the resulting calculated probability to a predetermined probability threshold (step 316). In some embodiments, the predetermined probability threshold may be the same predetermined probability threshold of step 310. However, in other embodiments, the each of steps 310 and 316 may utilize specific values for the predetermined probability threshold that are not the same. When the calculated probability is above the predetermined probability threshold (the "Yes" branch of 316), the process 300 returns a solution (step 318). Here, the solution is a string of phonemes associated with the calculated probability, and for which the plurality of speech recognition algorithms were executed in step 314. When the calculated probability is not above the predetermined probability threshold (the "No" branch of 316), the process 300 returns with no solution found. In certain embodiments, the process 300 may "fail" when the calculated probability is too low (e.g., when the calculated probability is not above the predetermined probability threshold).

The comparison of the first phoneme of the received set of speech data to one or more candidate words stored in a system dictionary (step 306) is employed for purposes of potentially decreasing processing requirements by eliminating some otherwise necessary sub-processes. However, in certain embodiments of FIG. 3, the process 300 omits step 306 by not making the comparison of a first phoneme of the received set of speech data to one or more candidate words stored in a system dictionary. In this scenario, the "Yes" and "No" branches of 306 are simply executed simultaneously. The process 300 assumes both incomplete and complete sets of speech data have been received, and simultaneously executes the single speech recognition algorithm based on zero omitted phonemes (step 308) and the plurality of speech recognition algorithms based on a predetermined number of omitted phonemes.

FIG. 8 is a flow chart that illustrates an embodiment of a process 800 for analyzing received speech data. It should be appreciated that the process 800 described in FIG. 8 represents one embodiment of step 202 described above in the discussion of FIG. 2, including additional detail. First, the process 800 utilizes signal processing techniques to process received voice data to obtain a set of overlapping feature vectors (step 802). Applicable signal processing techniques may include, without limitation, analog to digital conversion, fast Fourier transforms (FFT), linear predictive coding (LPC), filter banks, and/or the like. Generated feature vectors may include FFT or LPC coefficients to represent the frequency and/or energy bands of the received voice data at various intervals of time. The time intervals may be short or long based on the computational capacity of the computer system and the desired accuracy of the speech data recognition process. The process 800 generates a feature vector for every interval of time of the received voice data. Based upon the length of the time intervals and the length of time for each feature vector, there may be an overlap between successive feature vectors.

Next, the process 800 identifies quantization vectors associated with each of the set of overlapping feature vectors (step 804). After identifying quantization vectors associated with each of the set of overlapping feature vectors (step 804), the process 800 recognizes a codeword linked to each quantization vector (step 806). Here, during the quantization process, the process 800 transforms continuous signals into discrete signals (e.g., codewords).

FIG. 9 is a flow chart that illustrates an embodiment of a process 900 for preparing a speech recognition system for speech recognition applications. Process 900 is completed in advance of use of a speech recognition system by a user. First, the process receives a plurality of speech data samples, wherein each of the plurality of speech data samples articulates a particular phoneme (step 902). In an exemplary embodiment, the process 900 receives speech samples from a variety of different sources, providing the process 900 with slightly varying articulations of a designated phoneme.

Next, the process 900 recognizes and stores a plurality of codewords, based on the received plurality of speech data samples (step 904). This process is described above with regard to FIG. 8, and will not be redundantly described here.

After recognizing and storing a plurality of codewords (step 904), the process 900 creates and stores a plurality of probability relationships, each of the probability relationships relating a respective one of the plurality of codewords to the particular phoneme (step 906). From the received plurality of speech samples, the process 900 determines a likelihood for a particular codeword to appear in a specific phoneme. These probability relationships are computed and then stored for use in speech recognition. Generally, these probability relationships are stored in a list that is populated by a list of words that are used as part of a speech command, and each word is associated with its one or more component phonemes.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "processor-readable medium" or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like.

Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scopedefined by the claims, which includes known equivalents and foreseeable equivalents at the time of filing this patent application.

## Claims

1. A method for receiving and analyzing data compatible with voice recognition technology, the method comprising:
receiving speech data comprising at least a subset of an articulated statement;
executing a plurality of processes to generate a plurality of probabilities, based on the received speech data, each of the plurality of processes being associated with a respective candidate articulated statement, and each of the generated plurality of probabilities comprising a likelihood that an associated candidate articulated statement comprises the articulated statement; and
analyzing the generated plurality of probabilities to determine a recognition result,
wherein the recognition result comprises the articulated statement.

2. The method of Claim 1, further comprising:
processing the received voice data to obtain a set of overlapping feature vectors;
identifying a plurality of quantization vectors, wherein each of the plurality of quantization vectors are associated with each of the set of overlapping feature vectors; and
recognizing a plurality of codewords, wherein each of the plurality of codewords is linked to an identified quantization vector.

3. The method of Claim 2, further comprising:
performing a lookup to identify a candidate word, based on the recognized plurality of codewords; and
presenting the candidate word to a user and requesting user input to determine whether the speech data corresponds to the candidate word.

4. The method of Claim 3, wherein the performing step further comprises:
comparing a first codeword of the plurality of codewords to a first codeword of a second plurality of codewords;
wherein the second plurality of codewords is associated with the candidate word.

5. The method of Claim 1, wherein the candidate articulated statement comprises at least one candidate word, and each of the at least one candidate word comprises a plurality of codewords; and
wherein each of the plurality of processes comprises a signal processing algorithm utilized for speech recognition applications.

6. The method of Claim 1, wherein each of the plurality of processes comprises a Hidden Markov Model (HMM).

7. The method of Claim 1, wherein the executing step further comprises:
executing a first process to determine a first probability that the received speech data comprises the articulated statement; and
executing a second process to determine a second probability that the articulated statement comprises the received speech data and an omitted codeword;
wherein the plurality of processes comprises the first process and the second process; and
wherein the plurality of probabilities comprises the first probability and the second probability.

8. The method of Claim 2, further comprising:
identifying a first codeword of the recognized plurality of codewords, wherein the first codeword comprises a codeword uttered earliest in time.

9. The method of Claim 8, wherein the executing step further comprises:
executing a first process to determine a first probability that the identified first codeword comprises a first codeword of a predefined candidate word, wherein the predefined candidate word comprises a sequence of codewords; and
executing a second process to determine a second probability that the identified first codeword comprises a second codeword of a predefined candidate word;
wherein the plurality of processes comprises the first process and the second process; and
wherein the plurality of probabilities comprises the first probability and the second probability.

10. The method of Claim 8, further comprising:
executing an n^{th} process to determine a first probability that the identified first codeword comprises an (n+1)^{th} codeword of a predefined candidate word, wherein the predefined candidate word comprises a sequence of codewords; and
executing an (n+1)^{th} process to determine a second probability that the identified first codeword comprises an (n+2)^{th} codeword of a predefined candidate word;
wherein the plurality of processes comprises the n^{th} process and the (n+1)^{th} process; and
wherein the plurality of probabilities comprises the first probability and the second probability.

11. A system for receiving data compatible with speech recognition technology, the system comprising:
a user input module, configured to receive a set of audio data;
a data analysis module, configured to:
calculate one or more probabilities based on the received speech data, each of the calculated plurality of probabilities indicating a statistical likelihood that the set of audio data comprises a candidate word; and
determine a speech recognition result, based on the calculated plurality of probabilities.

12. The system of Claim 11, wherein the data analysis module is further configured to:
analyze the calculated plurality of probabilities to identify one or more candidate words with a statistical likelihood above a threshold; and
return the speech recognition result, based on the identified one or more candidate words.

13. The system of Claim 11, wherein the data analysis module is further configured to identify a first portion of the received audio data;
wherein the system further comprises a parameter module, configured to compare the first portion of the received audio data to a plurality of candidate words to locate a match, wherein each of the plurality of candidate words comprises a plurality of portions; and
wherein, when a match is located, the data analysis module is further configured to:
determine a probability that the matching candidate word comprises the set of audio data, wherein the one or more probabilities comprises the probability; and
return the speech recognition result, based on the determined probability.

14. The system of Claim 13, wherein, when a match has not been located, the data analysis module is further configured to:
determine a plurality of probabilities, each of the plurality of probabilities being associated with a candidate word, and each of the plurality of probabilities indicating a statistical likelihood that the received set of audio data comprises a respective, associated candidate word;
wherein the calculated one or more probabilities comprises the plurality of probabilities.

15. The system of Claim 14, wherein, when a match has not been located, the data analysis module is further configured to:
determine a first probability that the identified first portion comprises an (n+1)^{th} portion of a predefined candidate word, wherein the predefined candidate word comprises a sequence of portions; and
determine a second probability that the identified first portion comprises an (n+2)^{th} portion of a predefined candidate word;
wherein the one or more probabilities comprises the first probability and the second probability.
